# EUROPÄISCHE PATENTSCHRIFT

(11) **EP 1 896 793 B1**
(45) Veröffentlichungstag und Bekanntmachung des Hinweises auf die Patenterteilung: **26.08.2009**
(21) Anmeldenummer: 06722811.4
(22) Anmeldetag: 20.04.2006
(51) Int. Cl.: G01B 11/27

(54) **VORRICHTUNG UND VERFAHREN FÜR DIE MESSUNG DER WANGENATMUNG AN KURBELWELLEN**
APPARATUS AND METHOD FOR THE MEASUREMENT OF WEB DEFLECTION OF CRANKSHAFTS
DISPOSITIF ET METHODE POUR MESURER LA DEFLECTION DES BRAS DE VILEBREQUINS

(30) Priorität: 20.04.2005 DE 102005018515
(43) Veröffentlichungstag der Anmeldung: 12.03.2008
(73) Patentinhaber: Prüftechnik Dieter Busch AG, 85737 Ismaning (DE)
(72) Erfinder: BIERIG, Hans-Michael, 84489 Burghausen (DE)
(74) Vertreter: Pohlmann, Bernd Michael
(86) Internationale Anmeldenummer: PCT/DE2006/000693
(87) Internationale Veröffentlichungsnummer: WO 2006/111152

(56) Entgegenhaltungen:
- DE-A1- 10 109 462
- DE-A1- 10 138 831
- US-A- 6 040 903
- US-A- 6 046 799
- PATENT ABSTRACTS OF JAPAN Bd. 2003, Nr. 12, 5. Dezember 2003 (2003-12-05) -& JP 2004 061300 A (ASAHI SHOJI LTD; KOSHIN KK), 26. Februar 2004 (2004-02-26)
- PATENT ABSTRACTS OF JAPAN Bd. 1996, Nr. 07, 31. Juli 1996 (1996-07-31) -& JP 08 075402 A (NABCO LTD), 22. März 1996 (1996-03-22)
- PATENT ABSTRACTS OF JAPAN Bd. 018, Nr. 235 (P-1732), 28. April 1994 (1994-04-28) -& JP 06 026856 A (NABCO LTD; others: 01), 4. Februar 1994 (1994-02-04)
- PATENT ABSTRACTS OF JAPAN Bd. 2000, Nr. 04, 31. August 2000 (2000-08-31) -& JP 2000 028348 A (MITSUBISHI HEAVY IND LTD), 28. Januar 2000 (2000-01-28)

## Beschreibung

Die vorliegende Erfindung betrifft eine Vorrichtung und zugehörige Verfahren zur Messung von Kurbelwellen-Kennwerten. Insbesondere betrifft die Erfindung ein Meßgerät, mit welchem die sogenannte Wangenatmung (engl.: web deflection oder crankshaft deflection), auch Kurbelwangenatmung oder Kurbelwellenatmung genannt, an einer Kröpfung einer Kurbelwelle in präziser Weise gemessen werden kann.

Bekanntlich unterliegen Kurbelwellen von Motoren, Kompressoren o.ä. während des Betriebes gewissen und z. T. hohen Beanspruchungen. Es ist daher wichtig, daß zusätzliche mechanische Spannungen, die bereits statisch auf eine Kurbelwelle aufgebracht werden, auf ein Minimum gebracht werden.

In diesem Zusammenhang ist es seit langem eine wichtige, wenn auch mühsame Testprozedur, die Wangenatmung einer Kurbelwelle über einen möglichst großen Drehwinkel einer quasi betriebsbereiten Kurbelwelle eines Motors, insbesondere eines Schiffsdieselmotors, zu vermessen. Dies geschieht am besten bei einer Temperatur der Kurbelwelle und der Lager, welche der Betriebstemperatur entspricht oder nahekommt.

Ein zeitgemäßes Testgerät für die Bestimmung der Wangenatmung an einer Kurbelwelle wird beschrieben in der Patentschrift US 4,473,950, Erfinder Finn und Wilde. Dort wird auch kritisch Bezug genommen auf älteren bzw. einfacheren Stand der Technik, der mechanische Meßuhren zur Lösung des o.g. Meßproblems vorsieht. Gemäß der US 4,473,950 wird ein elektromechanischer Meßwandler in Form eines Differentialtransformators vorgesehen, um die Wangenatmung über den Drehwinkel einer Kurbelwelle zu bestimmen. Zusätzlich wird ein in der Nähe des Differentialtransformators angebrachtes Winkelmeßgerät auf Basis eines Potentiometers vorgesehen. Die geringen zur Verfügung stehende Drehmomente zum Betrieb des Potentiometers, dessen Reibmoment sowie die Störung durch das Anschlußkabel des Meßwandlers lassen diese Art der Winkelmessung unpraktisch erscheinen. Dementsprechend wird derzeit vom Patentinhaber der US 4,473,950 auch lediglich eine Ausführungsform vermarktet, bei der ein separater, außen am zu testenden Motor bzw. dessen Kurbelwelle anzubringender Winkelencoder vorgesehen ist.

Aus dem Dokument JP 2004-061300 A ist bereits eine Vorrichtung zur Bestimmung der Wangenatmung bekannt, wobei mittels eines Lasers die Winkelstellung der Relativlage der zur Kurbelwangen gehörenden Kurbelwelle gemessen wird. Bei dieser Vorrichtung wird angenommen, dass die Relativlage der Wellen der Relativlage der Kurbelwangen-Normalen entspricht.

Aus dem Dokument US 6,046,799 ist ferner eine Vorrichtung zur Bestimmung der Fehlausrichtung von zwei Wellen bekannt, die hintereinander angeordnet sind, wobei eine Lichtsendeeinrichtung und eine Lichtempfangseinrichtung oder eine Lichtsende-Empfangseinrichtung und eine reflektierende Einrichtung jeweils radial starr mit den hintereinander liegenden Wellen verbunden sind.

Zur Bestimmung der Achslage zweier Maschinenspindeln ist aus dem Dokument DE 101 09 462 A1 bekannt ein elektronisches Inklinometer zu verwenden, mit dem die Bestimmung von Parallelversatz und Winkelversatz der Spindeln genau möglich sein soll. Ferner ist aus dem Dokument DE 101 38 831 A1 bekannt, einen mikromechanischen Kreisel (MENS) zur Bestimmung der Drehlage einer Vorrichtung einzusetzen, mit welcher die parallel- und winkelmäßige Versatzlage zweier vertikal oder nicht horizontal angeordneter Maschinenwellen überprüfbar ist.

Es ist Aufgabe der Erfindung den Stand der Technik zu verbessern.

Die Aufgabe wird mit den Merkmalen der unabhängigen Patentansprüche gelöst.

Ferner umfasst die Erfindung eine Kurbelwelle mit einer Vorrichtung zur Messung der Wangenatmung sowie ein Verfahren zur Messung der Wangenatmung an Kurbelwellen.

Vorteilhafte Ausfiihrungsformen der Erfindung sind den abhängigen Patentansprüchen zu entnehmen.

Bei der Erfindung ist vorgesehen, daß anstelle herkömmlicher Meßapparaturen zur Bestimmung der Wangenatmung von Kurbelwellen über den Drehwinkel einer Kurbelwelle nunmehr ein optoelektronisches Meßgerät vorgesehen wird, welches normalerweise für die Bestimmung der Ausrichtung von Wellen an Motoren, Pumpen od. dgl. zum Einsatz kommt; insbesondere in einer Ausführungsform, in welcher ein berührungslos arbeitendes Inclinometer als Winkelmeßeinrichtung eingebaut ist. Als Beispiel solcher optoelektronischen Meßgeräte seien die Produkte "ROTALIGN" und "OPTALIGN plus" der Fa. PRÜFTECHNIK AG genannt. Von besonderem Vorteil ist es, wenn eine spezielle Ausführungsform eines solchen Meßgerätes vorgesehen wird, bei der Lichtsender und -empfänger innerhalb eines einzigen Gehäuses angeordnet sind, wie bei den o.g. Produkten. In diesem Falle kann eine Wangenatmung über den Drehwinkel auf überraschend einfache Weise dadurch ermittelt werden, daß Lichtsender und -empfänger innerhalb einer Kurbelwellenkröpfung auf der einen Wange fixiert werden, während auf der gegenüberliegenden Wange lediglich ein Planspiegel fixiert werden muß. Die Benutzung eines Planspiegels anstelle eines optischen Prismas ist dadurch begründet, daß zur Lösung der gestellten Meßaufgabe es eigentlich nur erforderlich ist, die Winkelstellung von Wangen-Normalen relativ zueinander zu bestimmen, nicht notwendigerweise auch den Drillwinkel zweier Wangen (gemessen um die Kurbelwellenachse) in Abhängigkeit von der

Drehlage ("Stellung") der Kurbelwelle. Es sei angemerkt, daß die genannten Prokukte ROTALIGN und OPTALIGN plus in der Lage sind, auch diese zusätzlich gestellte Meßaufgabe zu lösen, sofern dies erforderlich sein sollte.

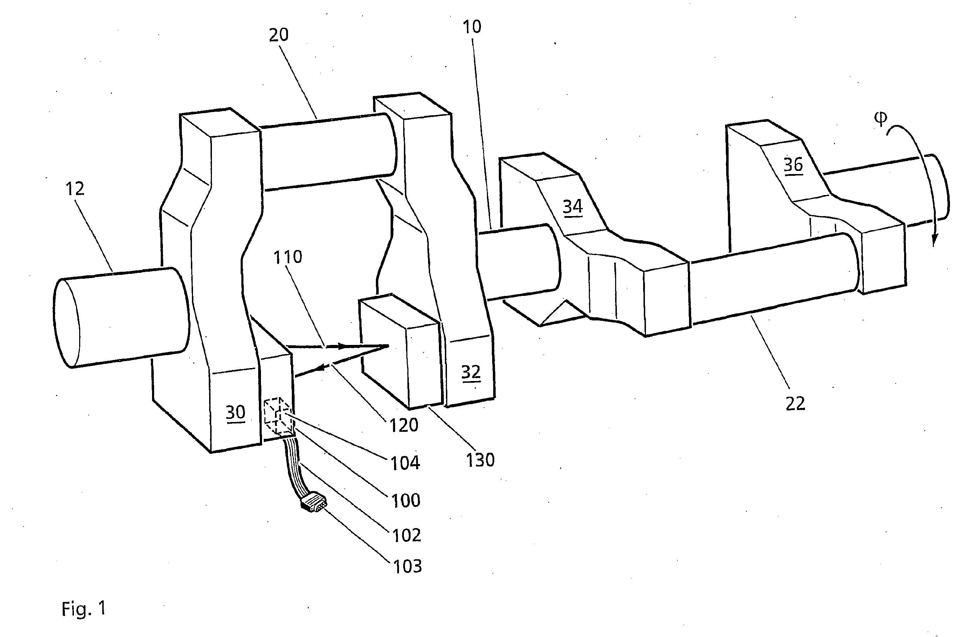

Eine - als bevorzugtes Beispiel zu betrachtende - Ausführungsform der Erfindung wird in Fig. 1 gezeigt.

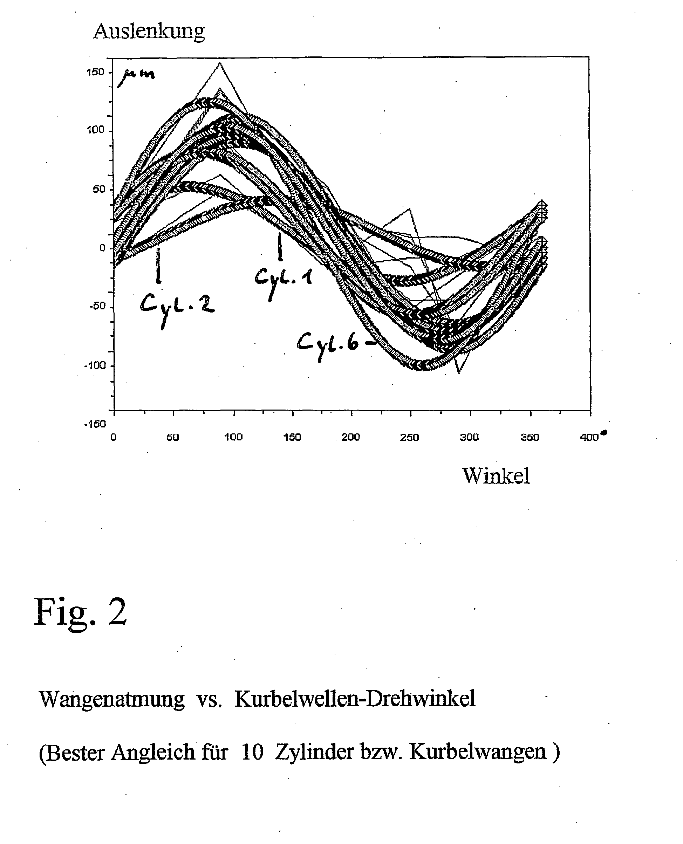

Eine innerhalb eines Motors (nicht gezeigt), bevorzugt eines Schiffsdieselmotors, angeordnete Kurbelwelle 10, bestehend aus Wellenzapfen 12, Kurbelzapfen 20, 22 sowie Kurbelwangen. (Wangen) 30, 32, 34, 36 wird temporär zu Meßzwecken an der ersten Kröpfung, an Wange 32, mit einem Planspiegel 130 versehen. Hierzu kann beispielsweise eine magnetisch wirkende Haltevorrichtung vorgesehen sein (nicht gezeigt). An der gegenüberliegende Wange 30 wird mit einer geeigneten, bevorzugt ebenfalls magnetisch wirkenden Haltevorrichtung ein Meßsystem 100 angebracht, wie es für das Wellenausrichten verwendet wird, beispielsweise ein OPTALIGN plus oder ein ROTALIGN Meßsystem. Ein solches Meßsystem 100 enthält bereits ein elektronisch wirkendes Inclinometer 104 zur korrekten Erfassung seiner Drehlage, bezogen auf eine Drehachse, die im wesentlichen parallel zum Lichtstrahl 110 liegt. Der' Lichtstrahl 110 wird vom Meßsystem 100 bevorzugt als Laserstrahl bereitgestellt. Er trifft unter annähernd rechtwinkligem Einfallswinkel auf den Planspiegel 130, wird von dort reflektiert, erreicht das Meßsystem 100 und wird dort registriert. In Kenntnis der lichten Weite (d.h. des lichten Abstandes) von Wange 30 zu Wange 32 kann das Meßsystem sodann die Winkeldifferenz zwischen seiner Hauptachse (in Richtung des Laserstrahls) und der Flächennormalen des Spiegels 130 errechnen, wie es dies in seinem ursprünglichen Anwendungsbereich auch vornehmen würde. Bei Drehung der in einem Motor eingebauten Kurbelwelle 10 um ihre Achse können also sowohl deren Drehstellung als auch die Wangenatmung an einer Kröpfung gemessen werden. Hierzu wird das Meßsystem 100 beispielsweise über ein Anschlußkabel 102 mit einem geeigneten Auswerteinstrument, z.B. einem Computer, in Verbindung gebracht. Bevorzugt wird das Meßsystem 100 jedoch drahtlos mit einer infrarot oder radiofrequent arbeitenden Datenübertragungseinrichtung, z.b. einer sogenannten "Bluetooth" - Vorrichtung mit einem solchen Auswerteinstrument in Verbindung gebracht. Gemäß der Erfindung werden mit Vorteil Messungen in mindestens drei, bevorzugt in mehr als 10 Drehlagen der Kurbelwelle vorgenommen. Die Wahl der genannten Drehlagen ist dabei gemäß der Erfindung nunmehr annähernd beliebig, sollte aber einen Sektor von etwa 30° überstreichen, um genügend genaue Meßresultate zu erhalten. Die weitere Auswertung der Messungen kann nach bekanntem Stand der Technik erfolgen. Insbesondere kann ein Angleich der Atmungs-Meßwerte in Abhängigkeit vom Drehwinkel der Kurbelwelle nach bekannten Verfahren der Fehler- und Ausgleichsrechnung vorgenommen werden; für diese sog. "sweep"-Messungen kann also durch sog. "least squares"-Anpassungen nach der Methode der kleinsten Quadratsummen eine besonders, vorteilhafte Präzisierung der Meßresultate herbeigeführt werden. Dies wird beispielhaft in Fig. 2 gezeigt. - Es ist von Vorteil, daß zum Zwecke der Meßwererfassung mit der erfindungsgemäßen Vorrichtung und dem erfindungsgemäßen Verfahren die an einem Motor vorgesehenen Kontrollöffihungen (Kurbelraumklappen) genutzt werden sollten, oder zumindest eine entsprechende Wanne des Motors entfernt ist. - Weiterhin versteht es sich, daß nach der Vermessung der Wangenatmung an einer ersten Kurbelwellenkröpfung sogleich mit der Vermessung der Wangenatmung an einer zweiten oder weiteren Kurbelwellenkröpfung begonnen werden kann. - Im Vergleich zu bislang bekannten Meßmethoden und -systemen ergibt sich somit eine erhebliche Einsparung an Arbeitszeit für die Erledigung der gestellten Meßaufgabe. Zusätzlich wird die unfallgefahr für das bei solchen Messungen eingesetzte Personal in sehr großem Umfange reduziert, da der Aufenthalt in gefährlicher Kurbelwellennähe nicht mehr erforderlich ist. Darüberhinaus wird gleichzeitig die Genauigkeit der Meßergebnisse von etwa 20% relativem Meßfehler auf ca. 5 % oder besser signifikant gesteigert. - Durch diese Vorteile ist es also möglich, die präzise Kontrolle von Kurbelwellen in Schiffsmotoren oder Großkompressoren bei äußerst geringem Mehrkostenaufwand und wesentlich häufiger vorzunehmen, als dies aus wirtschaftlichen Gründen bislang vertretbar oder möglich erschien. Die wirtschaftlichen Vorteile der Erfindung sind also direkt ersichtlich. Die empfohlenen Wangenatmungsmessungen können im Falle von Schiffsmotoren kurzfristig bei Hafenaufenthalt angesetzt werden und somit häufiger durchgeführt werden. Die Dokumentation der Ergebnisse kann wesentlich aussagekräftiger erfolgen, als dies bislang der Fall war. Dies ergibt letztendlich eine Verbesserung der Sicherheit für das Schiff und seiner Besatzung auf hoher See.

Die dargestellte Meßanordnung ist insofern als ein Beispiel zu verstehen, als auch andere handelsübliche Meßsysteme für das Wellenausrichten in direkt äquivalenter Weise gemäß der Erfindung verwendet werden können, auch wenn in einem solchen Falle es eventuell erforderlich ist, den Spiegel 130 durch ein zweites Meßsystem 100' (nicht gezeigt) zu ersetzen.

Äquivalent, und ebenfalls von besonderem technischem Vorteil ist es, den Spiegel 130 durch ein reflektierendes Prisma mit rechtwinklig aufeinanderstehenden Kathetenflächen (englisch: right angle prism) zu ersetzen. Mit Meßanordnungen dieser Art kann nämlich praktisch ohne Mehraufwand geprüft werden, ob die zu jeweiligen Wangen gehörenden Kurbelwellenabschnitte einen horizontalen oder vertikalen Versatz bzw. beides relativ zueinander aufweisen. Dies war bislang entweder überhaupt nicht möglich oder konnte aus praktischen Gründen bei einem Schiffsmotor in eingebautem Zustande nicht durchgeführt werden .

Die zuletztgenannten Systeme stellen also eine Vorrichtung dar für die Messung auch des parallelen Versatzmaßes von jeweils mit zwei Kurbelwangen in Verbindung stehenden Kurbelwellenabschnitten, und weisen dementsprechend beispielsweise eine optoelektronische Einrichtung 100 auf zur Vermessung von Winkel- und/oder Parallelversatzwerten an Kurbelwellen-Kröpfungen 20, 22, bzw. Wangen 30, 32; 34, 36 ; wobei auch hier die optoelektronische Einrichtung 100 (äquivalent: 100') pro Messung mindestens drei Meßwerte in Abhängigkeit von der Drehlage (phi) einer zu vermessenden Kurbelwelle 10 erfaßt und die Drehlage bevorzugt elektronisch ermittelt wird.

In diesem Sinne wird der Fachmann in der Lage sein, weitere äquivalente Meßsysteme bereitzustellen, welche berührungslos eine Distanz- und/oder Winkelmessung an Kurbelwellen-Wangen ausführen können und darüberhinaus eine berührungslose Messung der Drehlage von Kurbelwellen innerhalb eines Motorgehäuses zulassen, beispielsweise durch den Ersatz oder die Ergänzung von elektronischen Inclinometern durch elektronische Kreisel auf MEMS-Basis. Desgleichen kann der Fachmann mit Vorteil vorsehen, dass die Meßeinrichtung zusätzlich geeignet ist, die Temperatur der zu testenden Kurbelwelle oder des zugehörigen Motors zu bestimmen. Wie erwähnt, empfiehlt sich anstelle einer drahtgebundenen Übertragung von erfindungsgemäß erfaßten Meßdaten zu einem übergeordneten Rechner oder dergleichen eine drahtlose Übertragung. Eine solche drahtlose Übertragung kann mit Infrarotlicht oder mit radiofrequenten bzw. hochfrequenten Wellen (GHz-Bereich) vorgenommen werden, z.B. mit einer sog. Bluetooth-Schnittstelle.

## Patentansprüche

1. Vorrichtung für die Messung der Wangenatmung an Kurbelwellen
1a mit einer ersten optoelektronischen und einer zweiten optoelektronischen Einrichtung (100, 100') oder einer reflektierenden Einrichtung (130), wobei
1b die optoelektronischen Einrichtungen (100, 100') als Sende- und/oder Empfangseinrichtungen (100, 100') für einen Lichtstrahl (110) ausgebildet sind
1c die erste Sende- und/oder Empfangseinrichtung (100) und die zweite Sende- und/oder Empfangseinrichtung (100') oder die reflektierende Einrichtung (130) zur Bestimmung der Winkelstellung von Kurbelwangen - Normalen relativ zu einander ausgelegt sind
1d die erste Sende- und/oder Empfangseinrichtung (100) temporär auf einer ersten Wange (30) innerhalb einer Kröpfung der Kurbelwelle (10) anbringbar ist und
1e die zweite Sende- und/oder Empfangseinrichtung (100') oder die reflektierende Einrichtung (130) temporär auf der gegenüberliegenden Wange (32) innerhalb der Kröpfung der Kurbelwelle (10) anbringbar ist, **dadurch gekennzeichnet, dass**
bei der Vermessung der gegenseitigen Relativlage der Kurbelwangen-Normalen in Abhhängigkeit von der Drehlage der Kurbelwelle zur berührungslosen Messung der Drehlage der Kurbelwelle in der ersten optoelektronische Einrichtung (100) ein elektronisch wirkendes Inklinometer (104) oder ein elektronischer Kreisel auf MEMS-Basis enthalten ist.

2. Vorrichtung nach Anspruch 1, **dadurch gekennzeichnet, dass** die reflektierende Einrichtung ein Planspiegel ist.

3. Vorrichtung nach Anspruch 1, **dadurch gekennzeichnet, dass** die reflektierende Einheit ein Prisma ist.

4. Vorrichtung nach Anspruch 3, **dadurch gekennzeichnet, dass** erste Sende-und/oder Empfangseinrichtung (100) und das Prisma zur Vermessung des Parallelversatzmaßes von mit den Wangen (30, 32) in Verbindung stehenden Kurbelwellenabschnitten (10, 12) in Abhängigkeit von der Drehlage der zu vermessenden Kurbelwelle ausgelegt sind, wobei die optoelektronische Einrichtung (100) dazu ausgelegt ist, mindestens drei Messwerte in Abhängigkeit von der Drehlage (phi) einer zu vermessenden Kurbelwelle (10) zu erfassen.

5. Vorrichtung nach Anspruch 1, **dadurch gekennzeichnet, dass** erste Sende-und/oder Empfangseinrichtung (100) und die zweite Sende- und/oder Empfangseinrichtung (100') zur Vermessung des Parallelversatzmaßes von mit den Wangen (30, 32) in Verbindung stehenden Kurbelwellenabschnitten (10, 12) in Abhängigkeit von der Drehlage der zu vermessenden Kurbelwelle ausgelegt sind, wobei zumindest eine der optoelektronischen Einrichtungen (100, 100') dazu ausgelest ist, mindestens drei Messwerte in Abhängigkeit von der Drehlage (phi) einer zu vermessenden Kurbelwelle (10) zu erfassen.

6. Vorrichtung nach einem der vorhergehenden Ansprüche, geeignet zum Anschluss an ein übergeordnetes Auswertegerät in Form eines Computers, insbesondere eines tragbaren Computers.

7. Vorrichtung nach einem der vorhergehenden Ansprüche, **dadurch gekennzeichnet, dass** die erste optoelektronische und zweite optoelektronische Einrichtung (100, 100') oder die reflektierende Einrichtung (130) mittels einer magnetisch wirkenden Haltevorrichtung an der Wange (30, 32) anbringbar ist.

8. Kurbelwelle mit einer Vorrichtung nach Anspruch 1 für die Messung der Wangenatmung an Kurbelwellen
1a mit einer ersten optoelektronischen und einer zweiten optoelektronischen Einrichtung (100, 100') oder einer reflektierenden Einrichtung (130), wobei
1b die optoelektronischen Einrichtungen (100, 100') als Sende- und/oder Empfangseinrichtungen (100, 100') für einen Lichtstrahl (110) ausgebildet sind
1c die erste Sende- und/oder Empfangseinrichtung (100) und die zweite Sende- und/oder Empfangseinrichtung (100') oder die reflektierende Einrichtung (130) zur Bestimmung der Winkelstellung von Kurbelwangen - Normalen relativ zu einander ausgelegt sind
1d die erste Sende- und/oder Empfangseinrichtung (100) temporär auf einer ersten Wange (30) innerhalb einer Kröpfung der Kurbelwelle (10) angebracht ist und
1e die zweite Sende- und/oder Empfangseinrichtung (100') oder die reflektierende Einrichtung (130) temporär auf der gegenüberliegenden Wange (32) innerhalb der Kröpfung der Kurbelwelle (10) angebracht ist, **dadurch gekennzeichnet, dass**
bei der Vermessung der gegenseitigen Relativlage der Kurbelwangen-Normalen in Abhhängigkeit von der Drehlage der Kurbelwelle zur berührungslosen Messung der Drehlage der Kurbelwelle in der ersten optoelektronische Einrichtung (100) ein elektronisch wirkendes Inklinometer (104) oder ein elektronischer Kreisel auf MEMS-Basis enthalten ist.

9. Verfahren zur Messung der Wangenatmung an Kurbelwellen
1a mittels einer ersten optoelektronischen und einer zweiten optoelektronischen Einrichtung (100, 100') oder einer reflektierenden Einrichtung (130), wobei
1b die optoelektronischen Einrichtungen (100, 100') als Sende- und/oder Empfangseinrichtungen (100, 100') für einen Lichtstrahl (110) ausgebildet sind
1c die erste Sende- und/oder Empfangseinrichtung (100) und die zweite Sende- und/oder Empfangseinrichtung (100') oder die reflektierende Einrichtung (130) zur Bestimmung der Winkelstellung von Kurbelwangen - Normalen relativ zu einander ausgelegt sind
1d die erste Sende- und/oder Empfangseinrichtung (100) temporär auf einer ersten Wange (30) innerhalb einer Kröpfung der Kurbelwelle (10) angebracht wird
1e die zweite Sende- und/oder Empfangseinrichtung (100') oder die reflektierende Einrichtung (130) temporär auf der gegenüberliegenden Wange (32) innerhalb der Kröpfung der Kurbelwelle (10) angebracht wird, **dadurch gekennzeichnet, dass**
bei der Vermessung der gegenseitigen Relativlage der Kurbelwangen-Normalen in Abhhängigkeit von der Drehlage der Kurbelwelle zur berührungslosen Messung der Drehlage der Kurbelwelle ein in der ersten optoelektronischen Einrichtung (100) enthaltenes elektronisch wirkendes Inklinometer (104) oder ein in der ersten optoelektronischen Einrichtung (100) enthaltener elektronischer Kreisel auf MEMS-Basis verwendet wird.

10. Verfahren nach Anspruch 9, **dadurch gekennzeichnet, dass** die reflektierende Einrichtung ein Planspiegel ist.

11. Verfahren nach Anspruch 10, **dadurch gekennzeichnet, dass** die reflektierende Einheit ein Prisma ist.

12. Verfahren nach Anspruch 11, **dadurch gekennzeichnet, dass** erste Sende-und/oder Empfangseinrichtung (100) und das Prisma zur Vermessung des Parallelversatzmaßes von mit den Wangen (30, 32) in Verbindung stehenden Kurbelwellenabschnitten (10, 12) in Abhängigkeit von der Drehlage der zu vermessenden Kurbelwelle ausgelegt werden, wobei die optoelektronische Einrichtung (100) mindestens drei Messwerte in Abhängigkeit von der Drehlage (phi) einer zu vermessenden Kurbelwelle (10) erfasst werden.

13. Verfahren nach Anspruch 12 **dadurch gekennzeichnet, dass** die erste Sende- und/oder Empfangseinrichtung (100) und die zweite Sende- und/oder Empfangseinrichtung (100') zur Vermessung des Parallelversatzmaßes von mit den Wangen (30, 32) in Verbindung stehenden Kurbelwellenabschnitten (10, 12) in Abhängigkeit von der Drehlage der zu vermessenden Kurbelwelle ausgelegt werden, wobei zumindest mit einer der optoelektronischen Einrichtungen (100, 100') mindestens drei Messwerte in Abhängigkeit von der Drehlage (phi) einer zu vermessenden Kurbelwelle (10) erfasst werden.

## Claims

1. Apparatus for measuring the web deflection of crankshafts
1 a having a first optoelectronic and a second optoelectronic device (100, 100') or a reflecting device (130),
1 b the optoelectronic devices (100, 100') being designed as transmitting and/or receiving devices (100, 100') for a light beam (110),
1c the first transmitting and/or receiving device (100) and the second transmitting and/or receiving device (100') or the reflecting device (130) being designed to determine the angular position of crank web normals relative to one another,
1d it being possible for the first transmitting and/or receiving device (100) to be fitted temporarily on a first web (30) inside an elbow of the crankshaft (10), and
1e it being possible for the second transmitting and/or receiving device (100') or the reflecting device (130) to be fitted temporarily on the opposite web (32) inside the elbow of the crankshaft (10),
**characterized in that**
for the contactless measurement of the rotary position of the crankshaft an electronically acting inclinometer (104) or a MEMS-based electronic gyro is contained in the first optoelectronic device (100) during the measurement of the mutual relative position of the crank web normals as a function of the rotary position of the crankshaft.

2. Apparatus according to Claim 1, **characterized in that** the reflecting device is a plane mirror.

3. Apparatus according to Claim 1, **characterized in that** the reflecting unit is a prism.

4. Apparatus according to Claim 3, **characterized in that** the first transmitting and/or receiving device (100) and the prism are designed to measure the extent of parallel offset of crankshaft sections (10, 12) connected to the webs (30, 32) as a function of the rotary position of the crankshaft to be measured, the optoelectronic device (100) being designed to acquire at least three measured values as a function of the rotary position (phi) of a crankshaft (10) to be measured.

5. Apparatus according to Claim 1, **characterized in that** the first transmitting and/or receiving device (100) and the second transmitting and/or receiving device (100¹) are designed to measure the extent of parallel offset of crankshaft sections (10, 12) connected to the webs (30, 32) as a function of the rotary position of the crankshaft to be measured, and at least one of the optoelectronic devices (100, 100') being designed to acquire at least three measured values as a function of the rotary position (phi) of a crankshaft (10) to be measured.

6. Apparatus according to one of the preceding claims which is suitable for connection to a higher order evaluation unit in the form of a computer, in particular a portable computer.

7. Apparatus according to one of the preceding claims, **characterized in that** the first optoelectronic and second optoelectronic device (100, 100') or the reflecting device (130) can be fitted on the web (30, 32) by means of a magnetically acting holding apparatus.

8. Crankshaft with an apparatus according to Claim 1 for measuring the web deflection of crankshafts,
1 a having a first optoelectronic and a second optoelectronic device (100, 100') or a reflecting device (130),
1 b the optoelectronic devices (100, 100') being designed as transmitting and/or receiving devices (100, 100') for a light beam (110),
1c the first transmitting and/or receiving device (100) and the second transmitting and/or receiving device (100') or the reflecting device (130) being designed to determine the angular position of crank web normals relative to one another,
1d the first transmitting and/or receiving device (100) being fitted temporarily on a first web (30) inside an elbow of the crankshaft (10), and
1e the second transmitting and/or receiving device (100') or the reflecting device (130) being fitted temporarily on the opposite web (32) inside the elbow of the crankshaft (10),
**characterized in that** for the contactless measurement of the rotary position of the crankshaft an electronically acting inclinometer (104) or a MEMS-based electronic gyro is contained in the first optoelectronic device (100) during the measurement of the mutual relative position of the crank web normals as a function of the rotary position of the crankshaft.

9. Method for measuring the web deflection of crankshafts
1a by means of a first optoelectronic and a second optoelectronic device (100, 100') or a reflecting device (130),
1 b the optoelectronic devices (100, 100') being designed as transmitting and/or receiving devices (100, 100') for a light beam (110),
1c the first transmitting and/or receiving device (100) and the second transmitting and/or receiving device (100') or the reflecting device (130) being designed to determine the angular position of crank web normals relative to one another,
1d the first transmitting and/or receiving device (100) being fitted temporarily on a first web (30) inside an elbow of the crankshaft (10), and
1e the second transmitting and/or receiving device (100') or the reflecting device (130) being fitted temporarily on the opposite web (32) inside the elbow of the crankshaft (10),
**characterized in that**
an electronically acting inclinometer (104) contained in the first optoelectronic device (100) or a MEMS-based electronic gyro contained in the first optoelectronic device (100) is used for the contactless measurement of the rotary position of the crankshaft during the measurement of the mutual relative position of the crank web normals as a function of the rotary position of the crankshaft.

10. Method according to Claim 9, **characterized in that** the reflecting device is a plane mirror.

11. Method according to Claim 10, **characterized in that** the reflecting unit is a prism

12. Method according to Claim 11, **characterized in that** the first transmitting and/or receiving device (100) and the prism are designed to measure the extent of parallel offset of crankshaft sections (10, 12) connected to the webs (30, 32) as a function of the rotary position of the crankshaft to be measured, the optoelectronic device (100) being designed to acquire at least three measured values as a function of the rotary position (phi) of a crankshaft (10) to be measured.

13. Method according to Claim 12, **characterized in that** the first transmitting and/or receiving device (100) and the second transmitting and/or receiving device (100') are designed to measure the extent of parallel offset of crankshaft sections (10, 12) connected to the webs (30, 32) as a function of the rotary position of the crankshaft to be measured, at least one of the optoelectronic devices (100, 100') being used to acquire at least three measured values as a function of the rotary position (phi) of a crankshaft (10) to be measured.

## Revendications

1. Dispositif de mesure de la déflexion d'un flasque de vilebrequin, présentant :
(1a) un premier système optoélectronique et un deuxième système optoélectronique (100, 100') ou un système réfléchissant (130),
(1 b) les systèmes optoélectroniques (100, 100') étant configurés comme systèmes d'émission et/ou de réception (100, 100') d'un rayon lumineux (110),
(1c) le premier système d'émission et/ou de réception (100) et le deuxième système d'émission et/ou de réception (100') ou le système réfléchissant (130) étant conçus pour déterminer la position angulaire relative entre les normales aux flasques de vilebrequin,
(1d) le premier système d'émission et/ou de réception (100) pouvant être placé temporairement sur un premier flasque (30) d'un coude du vilebrequin (10) et
(1e) le deuxième système d'émission et/ou de réception (100') ou le système réfléchissant (130) pouvant être placés temporairement sur le flasque (32) opposé du coude du vilebrequin (10),
**caractérisé en ce que**
lors de la mesure de la position relative mutuelle des normales aux flasques de vilebrequin en fonction de la position de rotation du vilebrequin, pour la mesure sans contact de la position de rotation du vilebrequin, le premier système optoélectronique (100) contient un inclinomètre (104) qui fonctionne électroniquement ou un gyroscope électronique à base MEMS.

2. Dispositif selon la revendication 1, **caractérisé en ce que** le système réfléchissant est un miroir plan.

3. Dispositif selon la revendication 1, **caractérisé en ce que** l'unité réfléchissante est un prisme.

4. Dispositif selon la revendication 3, **caractérisé en ce que** le premier système d'émission et/ou de réception (100) et le prisme sont conçus pour mesurer l'ampleur du décalage par rapport au parallélisme de parties (10, 12) du vilebrequin reliées aux flasques (30, 32) en fonction de la position de rotation du vilebrequin à mesurer, le système électronique (100) étant conçu pour saisir au moins trois valeurs de mesure en fonction de la position de rotation (phi) du vilebrequin (10) à mesurer.

5. Dispositif selon la revendication 1, **caractérisé en ce que** le premier système d'émission et/ou de réception (100) et le deuxième système d'émission et/ou de réception (100') sont conçus pour mesurer l'ampleur du décalage par rapport au parallélisme de parties (10, 12) du vilebrequin reliées aux flasques (30, 32) en fonction de la position de rotation du vilebrequin à mesurer, au moins l'un des systèmes électroniques (100, 100') étant conçu de manière à saisir au moins trois valeurs de mesure en fonction de la position en rotation (phi) du vilebrequin (10) à mesurer.

6. Dispositif selon l'une des revendications précédentes, convenant pour être raccordé à un appareil d'évaluation d'ordre hiérarchique plus élevé qui présente la forme d'un ordinateur et en particulier d'un ordinateur portable.

7. Dispositif selon l'une des revendications précédentes, **caractérisé en ce que** le premier et le deuxième système optoélectronique (100, 100') ou le système réfléchissant (130) peuvent être placés sur le flasque (30, 32) au moyen d'un dispositif de maintien agissant magnétiquement.

8. Arbre de vilebrequin doté d'un dispositif selon la revendication 1 pour la mesure de la déflexion de flasques d'arbres de vilebrequin, présentant :
(1a) un premier système optoélectronique et un deuxième système optoélectronique (100, 100') ou un système réfléchissant (130),
(1b) les systèmes optoélectroniques (100, 100') étant configurés comme systèmes d'émission et/ou de réception (100, 100') d'un rayon lumineux (110),
(1c) le premier système d'émission et/ou de réception (100) et le deuxième système d'émission et/ou de réception (100') ou le système réfléchissant (130) étant conçus pour déterminer la position angulaire relative entre les normales aux flasques de vilebrequin,
(1d) le premier système d'émission et/ou de réception (100) pouvant être placé temporairement sur un premier flasque (30) d'un coude du vilebrequin (10) et
(1e) le deuxième système d'émission et/ou de réception (100') ou le système réfléchissant (130) pouvant être placés temporairement sur le flasque (32) opposé du coude du vilebrequin (10),
**caractérisé en ce que**
lors de la mesure de la position relative mutuelle des normales aux flasques de vilebrequin en fonction de la position de rotation du vilebrequin, pour la mesure sans contact de la position de rotation du vilebrequin, le premier système optoélectronique (100) contient un inclinomètre (104) qui fonctionne électroniquement ou un gyroscope électronique à base MEMS.

9. Procédé de mesure de la de la déflexion d'un vilebrequin
(1a) au moyen d'un premier système optoélectronique et un deuxième système optoélectronique (100, 100') ou d'un dispositif réfléchissant (130),
(1b) les systèmes optoélectroniques (100, 100') étant configurés comme systèmes d'émission et/ou de réception (100, 100') d'un rayon lumineux (110),
(1c) le premier système d'émission et/ou de réception (100) et le deuxième système d'émission et/ou de réception (100') ou le système réfléchissant (130) étant conçus pour déterminer la position angulaire relative entre les normales aux flasques de vilebrequin,
(1d) le premier système d'émission et/ou de réception (100) pouvant être placé temporairement sur un premier flasque (30) d'un coude du vilebrequin (10) et
(1e) le deuxième système d'émission et/ou de réception (100') ou le système réfléchissant (130) pouvant être placés temporairement sur le flasque (32) opposé du coude du vilebrequin (10),
**caractérisé en ce que**
lors de la mesure de la position relative mutuelle des normales aux flasques de vilebrequin en fonction de la position de rotation du vilebrequin, pour la mesure sans contact de la position de rotation du vilebrequin, on utilise un inclinomètre (104) qui fonctionne électroniquement et contenu dans le premier système optoélectronique (100) ou un gyroscope électronique à base MEMS contenu dans le premier système optoélectronique (100).

10. Procédé selon la revendication 9, **caractérisé en ce que** le dispositif réfléchissant est un miroir plan.

11. Procédé selon la revendication 10, **caractérisé en ce que** l'unité réfléchissante est un prisme.

12. Procédé selon la revendication 11, **caractérisé en ce que** le premier système d'émission et/ou de réception (100) et le prisme de mesure du décalage parallèle sont conçus pour mesurer l'ampleur du décalage par rapport au parallélisme de parties (10, 12) du vilebrequin reliées aux flasques (30, 32) en fonction de la position de rotation du vilebrequin à mesurer, le système électronique (100) saisissant au moins trois valeurs de mesure en fonction de la position en rotation (phi) du vilebrequin (10) à mesurer.

13. Procédé selon la revendication 12, **caractérisé en ce que** le premier système d'émission et/ou de réception (100) et le deuxième système d'émission et/ou de réception (100') sont conçus pour mesurer l'ampleur du décalage par rapport au parallélisme de parties (10, 12) du vilebrequin reliées aux flasques (30, 32) en fonction de la position de rotation du vilebrequin à mesurer, au moins trois valeurs de mesure étant saisies par l'un des systèmes électroniques (100, 100') en fonction de la position en rotation (phi) du vilebrequin (10) à mesurer.
